# EUROPEAN PATENT SPECIFICATION

(11) **EP 2 451 297 B1**
(45) Date of publication and mention of the grant of the patent: **03.07.2013**
(21) Application number: 10731910.5
(22) Date of filing: 09.07.2010
(51) Int. Cl.: A23L 1/226, A23L 1/231, C07D 207/20, C07D 307/64

(54) **FLAVORING COMPOSITIONS FOR SAVORY APPLICATIONS**
ZUSAMMENSETZUNGEN ZUR ANWENDUNG ALS UMAMI-AROMA
COMPOSITIONS DE SAVEUR POUR AMELIORER LE GOUT DE LA VIANDE

(30) Priority: 10.07.2009 EP 09165132
(43) Date of publication of application: 16.05.2012
(73) Proprietor: Firmenich S.A., 1211 Geneva 8 (CH)
(72) Inventor: LIN, Jianming, Plainsboro, New Jersey 08536 (US); MOSIMANN, Hervé, CH-1211 Geneva 8 (CH); FREROT, Eric, 1211 Geneva 8 (CH); WANG, Ying, Plainsboro, NJ 08536 (US)
(74) Representative: Carina, Riccardo Filippo
(86) International application number: PCT/US2010/041549
(87) International publication number: WO 2011/006080

(56) References cited:
- WO-A-2008/015638
- WO-A-2009/034528
- US-A- 4 522 838
- US-A- 5 280 127
- US-A- 5 401 521
- US-A- 5 446 171
- "Handbook of Meat, Poultry and Seafood Quality, Chapter 13: Savory Flavors", 10 December 2007 (2007-12-10), BLACKWELL PUBLISHING, XP002547343, Retrieved from the Internet: URL:http://www3.interscience.wiley.com/cgi -bin/booktext/117355369/BOOKPDFSTART> [retrieved on 2009-09-24] tables 13.3-13.7 & 10 December 2007 (2007-12-10) Retrieved from the Internet: URL:http://www3.interscience.wiley.com/cgi -bin/bookhome/117355354> [retrieved on 2009-09-24] To prove publication date of XP002547343
- KERLER, J. GROSCH, W.: "Odorants contributing to warmed-over flavor (WOF) of refrigerated cooked beef", JOURNAL OF FOOD SCIENCE, vol. 61, no. 6, 1996, pages 1271-1275, XP002547345,

## Description

### Technical Field

The present invention relates to the field of flavors. More particularly, it concerns certain flavor precursors that can generate flavoring ingredients, which impart or reinforce certain savory notes.

Furthermore, the present invention concerns also flavor compositions containing at least one such compound.

### Prior Art

2-Acetyl pyrroline and its preparation is described in various articles: in particular, Synthesis of 2-acetyl-1-pyrroline, The Principal Rice Flavor Component, J. Agric. Food Chem. 1993, 41, 1458, N. G. De Kimpe, C. V Stevens, M. A. Keppens.; Novel Syntheses of the Major Flavor Components if Bread and Cooked Rice, J. Agric. Food Chem. 1996, 44, 1515, N. De Kimpe and M. Keppens; and New and Convenient Syntheses of the Important Roasty Popcorn-like Smelling Food Aroma Compounds 2-Acetyl Pyrroline and 2-Acetyltetrahydropyridine and Their Corresponding Cyclic α-Amino Acids, J. Agric. Food Chem. 1998, 46, 616, T. Hofmann, P. Schieberle. In these documents, the aroma of 2-acetyl pyrroline is described as cooked rice, cracker-like or popcorn-like.

WO 2009/034528 relates about the use of some acyl piperidyls or acyl tetrahydropyridines as flavoring ingredient to impart or reinforce the savory, roast and/or caramel flavor notes of flavoring compositions or flavored foods.

"Handbook of Meat, Poultry and Seafood Quality, Chapter 13: Savory Flavors", 10 December 2007 (2007-12-10), BLACKWELL PUBLISHING, discloses that pyrrolidine contributes to the flavour of cooked crab.

US-A-4522838 (Buttery et al) discloses its use for imparting a scented rice flavor to foods. The compound can be used together with liquid or solid vehicles or carriers, though no preference is given to a specific carrier. According to the description, the compound is stable in solution (e.g. water, ethanol) but, in the pure state, turns red on standing. Therefore, it would be desirable to address the problem of storage stability.

US-A-5280127, US-A-5401521 and US-A-5446171 (all to Duby et al) disclose processes for preparing 2-acetyl-1-pyrroline involving reacting with an acid, preferably a mineral acid, and then neutralizing with a base, preferably a strong base.

Nevertheless, it would be useful to provide a precursor of the abovementioned flavor ingredient in order to provide food products that release the desired flavor during the food preparation, e.g. through the action of heat or pH modification.

To the best of our knowledge, none of the documents mentioning this compound anticipates, reports or suggests the precursor that can release the desired flavor compounds.

### Detailed Description of the Invention

We have now surprisingly discovered that a compound of formula 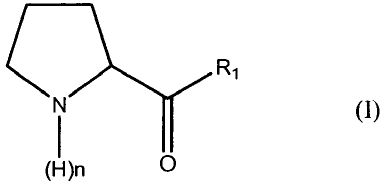 wherein n=1 and R¹ represents a methyl or ethyl group, said compound being in the form of an edible salt;
can be used as flavor precursor for generating an ingredient to impart or reinforce the savory, meaty notes of a flavoring composition or of a flavored food.

According to a preferred embodiment of the invention, the edible salt is an acidic salt of a compound of formula (I).

Thus, in the context of the present invention, the phrase "edible salt" means a salt obtained by reacting the free base with an acid which is edible. Examples of suitable acids include HCl, sulfuric acid or hydrogeno sulfates, phosphoric acid or hydrogeno phosphates, carbonic acids or C₂-C₂₀ carboxylic acids. Mineral acids are particularly preferred.

The compound of formula (I) is an edible salt of 2-acetyl pyrrolidine or 2-propionyl pyrrolidine. Preferred salts are chlorides, sulfates or carbonate salts. More preferably, the compound of formula (I) is an edible salt of 2-acetyl pyrrolidine, most preferably the compound is the chloride of 2-acetyl pyrrolidine.

As mentioned above, the invention concerns a compound according to formula (I) as a precursor to a flavoring ingredient that imparts savory, meaty notes. Typically the present savory, meaty notes include dried or cured meats, especially dried ham tonalities.

According to a particular embodiment of the invention, such use is very much appreciated by flavorists to impart the taste of cured meats, such as ham, especially dried ham.

In other words, the precursor can be used in a method to confer, enhance, improve or modify the flavor properties, as indicated above, of a flavoring composition, which method comprises adding to said composition an effective amount of at least a compound of formula (I), and performing a step such as heating or modifying the pH during preparation of the composition to generate a flavoring compound. The phrase "use of a compound of formula (I)" means also the use of any composition containing the compound of formula (I) and which can be advantageously employed in the flavor industry as a precursor of the active ingredients.

Flavor compositions are also an embodiment of the present invention.

Therefore, another embodiment of the present invention is a flavoring composition comprising:
i) as flavor precursor, at least one compound of formula (I) as defined above;
ii) at least one ingredient selected from the group consisting of a flavor carrier and a flavor base; and
iii) optionally at least one flavor adjuvant.

According to a particular embodiment of the invention, said flavoring composition comprises:
i) as flavor precursor ingredient, at least one compound of formula (I) as defined above;
ii) a flavor base of the savory, roast and/or caramel type; and
iii) optionally at least one ingredient selected from the group consisting of a flavor carrier and flavor adjuvant.

By "flavor carrier" we mean here a material which stabilizes edible salt of the compound according to formula (I). In particular, acids have been found to help improve stability of the compound. Examples of suitable acids include citric acid, ascorbic acid, phosphoric acid, lactic acid and mixtures thereof. Citric acid is particularly preferred. This is in contrast to the prior art referred to above, which requires that, after addition of an acid to the flavor material (not the precursor), neutralization using a strong base is required.

The flavor carrier may also comprise other materials that are preferably practically neutral from a flavor perspective, i.e. which does not significantly alter the organoleptic properties of flavoring ingredients.

For instance, liquid carriers may comprise, as non-limiting examples, an emulsifying system, i.e. a solvent and a surfactant system, or a solvent commonly used in flavors. A detailed description of the nature and type of solvents commonly used in flavor cannot be exhaustive.

The inventors have also found that the stability of the precursor may be further improved by mixing with a carbohydrate carrier and then encapsulating the mixture by drying to forma matrix entrapping the precursor. Examples of such carbohydrate materials may comprise wall-forming and plasticizing materials, such as mono, di- or trisaccharides, natural or modified starches, hydrocolloids, cellulose derivatives, polyvinyl acetates, polyvinylalcohols, proteins or pectins, or yet the materials cited in reference texts such as H. Scherz, Hydrokolloids : Stabilisatoren, Dickungs- und Geliermittel in Lebensmittel, Band 2 der Schriftenreihe Lebensmittelchemie, Lebensmittelqualität, Behr's VerlagGmbH & Co., Hamburg, 1996.

Nevertheless, it has been found that encapsulation of the flavor precursor in maltodextrin having a DE of from 5 to 20, more preferably from 10 to 20, even more preferably from 12 to 20, most preferably from 15 to 20.

Most preferably, the precursor is mixed with the acid and the carbohydrate carrier in an aqueous solution and then dried.

Methods, of encapsulation are well known to a person skilled in the art, and may be performed using any one of the diverse techniques known in the art, such as, for example, spray-drying, agglomeration, extrusion, coating encapsulation and freeze-drying. Extrusion and spray-drying are most preferred.

In the context of the present invention, "flavor base" means a composition comprising at least one flavoring co-ingredient.

The flavoring co-ingredient is not a compound of formula (I). In the context of the present invention, "flavoring co-ingredient" means a compound, which is used in flavoring preparations or compositions to impart a hedonic effect. In other words such a co-ingredient, to be considered as being a flavoring one, must be recognized by a person skilled in the art as being able to impart or modify in a desired way the taste of a composition, and not just as having a taste.

The nature and type of the flavoring co-ingredient(s) present in the base do not warrant a more detailed description here, which in any case would not be exhaustive, the skilled person being able to select them on the basis of his general knowledge and according to intended use or application and the desired organoleptic effect. In general terms, flavoring co-ingredients belong to chemical classes as varied as alcohols, aldehydes, ketones, esters, ethers, acetates, nitriles, terpenoids, nitrogenous or sulphurous heterocyclic compounds and essential oils, and said co-ingredients can be of natural or synthetic origin. Many of these co-ingredients are in any case listed in reference texts such as the book by S. Arctander, Perfume and Flavor Chemicals, 1969, Montclair, New Jersey, USA, or its more recent versions, or in other works of a similar nature, as well as in the abundant patent literature in the field of flavor. It is also understood that said co-ingredients may also be compounds known to release in a controlled manner various types of flavoring compounds.

However, according to a particular embodiment of the invention, said flavor base advantageously comprises at least a compound of formula 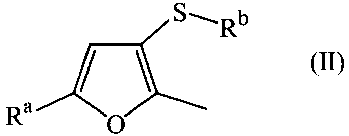 wherein R^{a} represents a hydrogen atom or a methyl group, and R^{b} represents a methyl or ethyl group, an acetyl group, or a C₃-C₁₀ group comprising a carbonyl group. These compounds are known to impart meaty notes in flavors.

In a particular embodiment R^{b} is a group such as methyl, acetyl, 2-furan-carnonyl, 1-methyl-3-oxo-butyl, 1-methyl-3-oxo-propyl, 1-ethyl-3-oxo-propyl, 1-propyl-3-oxopropyl, 1,1-dimethyl-3-oxo-propyl, 1-pentyl-5-oxo-pent-3-enyl. In a particularly preferred embodiment R^{a} is a hydrogen atom.

Non-limiting examples of compounds (II) include S-(2-5-dimethyl-3-furyl) 2-furancarbothionate, 2-methyl-3-(methylthio)furan, S-(2-methyl-3-furyl) ethanethionate, or 3-[(2-methyl-3-furyl)thio]butanal.

Therefore a flavoring composition comprising at least one compound of formula (I) and at least one compound of formula (II) is also an embodiment of the present invention.

A flavoring composition comprising at least one compound of formula (I) may also comprise a flavor adjuvant. In the context of the present invention "flavor adjuvant" means an ingredient capable of imparting additional added benefit such as a color, a particular light resistance, chemical stability, etc. A detailed description of the nature and type of adjuvant commonly used in flavoring bases cannot be exhaustive, but it has to be mentioned that said ingredients are well known to a person skilled in the art.

A composition comprising at least one compound of formula (I) and at least one flavor carrier represents a particular embodiment of the invention as well as a flavoring composition comprising at least one compound of formula (I), at least one flavor carrier, at least one flavor base, and optionally at least one flavor adjuvant.

In the flavoring compositions mentioned above, it is sometimes desirable to have more than one compound of formula (I) as this enables the flavorist to prepare accords, which are flavors possessing a combination of flavor tonalities of various compounds of the invention.

Preferably, any mixture resulting directly from a chemical synthesis, e.g. without an adequate purification, in which the compound of the invention would be involved as a starting, intermediate or end-product could not be considered as a flavoring composition according to the invention.

A compound of formula (I) can be advantageously incorporated into flavored articles to impart a taste to, or modify the taste of said articles. Consequently, the invention also relates to a flavoring composition in the form of a foodstuff comprising:
i) as flavoring precursor ingredient, at least one compound of formula (I), as defined above, or a flavoring composition comprising at least one flavoring precursor compound of formula (I); and
ii) a foodstuff base.

A foodstuff base is an edible product such as a food or beverage. Suitable foodstuff bases include savory cubes, instant soup, canned soups, preserved meats, instant noodles, frozen dishes and preparations, sauces in all forms, such as cooked tomato sauces derivatives, flavored oils and/or spreads, toffees, alcoholic beverages having molasses/caramelic notes such as rum and sugar cane derived beverages. Other suitable foodstuff bases include snacks and biscuits, as well as pizzas (frozen or ready to cook).

The nature and type of the constituents of the foodstuffs or beverages do not warrant a more detailed description here, which in any case would not be exhaustive, the skilled person being able to select them on the basis of his general knowledge and according to the nature of said product.

The proportions in which the compounds according to the invention can be incorporated into the various aforementioned articles or compositions vary within a wide range of values. These values are dependent on the nature of the article to be flavored and on the desired organoleptic effect as well as the nature of the co-ingredients in a given base when the compound according to the invention is mixed with flavoring co-ingredients, solvents or additives commonly used in the art.

In the case of flavoring compositions, typical concentrations are in the order of 0.0001 % to 1 % by weight of the compound according to formula (I), based on the weight of the consumer product into which they are incorporated. Concentrations below the abovementioned range, such as in the order of 0.001% to 0.5% by weight, can be used when these compounds are incorporated into flavored articles, percentage being relative to the weight of the article.

As mentioned above, the flavor precursor is capable of generating the flavor compound that imparts or increases desired savory notes. Generation of the flavor compound can be performed according to various processes including, but not limited to, heating during processing of the foodstuff, exposing the flavor precursor to oxygen, reacting the precursor with a base and so on. The skilled person in the art of flavoring will readily appreciate the manner in which the flavor compound can be generated.

In a preferred aspect, once the flavor compound is generated, the resulting flavor compound is extracted into a solvent to ensure it remains stable. Suitable solvents include propylene glycol and triacetine. Triacetine is particularly preferred.

### Examples

The invention will now be described in further detail by way of the following example, wherein the abbreviations have the usual meaning in the art.

### Example 1

### Preparation of 2-acetyl pyrrolidine hydrochloride flavor precursor

To a solution of N-(tert-butoxycarbonyl)-L-proline N'-methoxy-N' methylamide (5 g, 19.38 mmol) in diethyl ether (50 mL) was added dropwise a solution of MeMgBr (19 mL, 3 M in diethyl ether, 57 mmol) at 0°C under N2 atmosphere. After addition, the mixture was stirred for an additional 1.5 h. The reaction was then quenched by adding water (20 mL). The resulting suspension was extracted with diethyl ether (3 x 20 mL). The combined organic phase was washed with brine, then dried over anhydrous MgSO₄. After filtering off MgSO₄, the solvent was removed by rotary evaporation under vacuum. About 3 g (72.7 % yield) of tert-butyl-2-acetyl-1-pyrrolidinecarboxylate was obtained as a colorless oil after purification of the residue by flash column chromatography using a silica column. The elution solvent was a gradient of pentane/diethyl ether from 80/20 (v/v) to 70/30 (v/v) within 40 min.
MS: 213 (0.1, M+), 170 (19), 140 (7), 114 (44), 96 (11), 71 (5), 70 (100), 69 (6), 57 (89), 43 (19), 42 (6), 41 (25)
¹H NMR (500 MHz, CD₃OD): δ 4.35, 4.18 (1H, m), 3.58 (2H, m), 2.13, 2.17 (3H, s), 1.94 (4H, m), 1.42, 1.46 (9H, s)

To a solution of tert-butyl-2-acetyl-1-pyrrolidinecarboxylate (1.2 g, 5.63mmol) in ether (3 mL) was added HCl solution (30 mL, 2M HCl in diethyl ether, 60 mmol) at 0°C. After addition, the mixture was stirred at room temperature for 2 days. The solvent was removed by N₂ stream to yield a pale yellow oil. The resulting oil was washed with pentane/ether (8/2, v/v, 10 mL) 4 times by adding the solvent, stirring for 1 min and removing the solvent by pipette. Acetone (10 mL) was then added to dissolve the desired product and the light brown impurity remained at the bottom of the flask. The top acetone solution was filtered through a pipette loaded with cotton as filter. Additional acetone (5 mL) was used to rinse the vial and then passed through the filtering pipette. The combined acetone solution was concentrated by rotary evaporator (30°C, 20 torr) yielding 680 mg (89.7% yield) of 2-acetyl pyrrolidine hydrochloride.
¹H NMR (500 MHz, DMSO): δ 1.82 (mc, 1 H); 1.85-2.00 (m, 2H); 2.28 (s, 3H); 2.29-2.38 (m, 1H); 3.16 (mc, 2 H); 4.47 (mc, 1H)
¹³C NMR (125 MHz, DMSO): δ 202.8, 65.2, 45.0, 27.0, 26.6, 23.1

### Example 2

### Flavoring compositions and flavored article according to the invention

Two ham-flavored sausage meat products, (A) and (B), comprised the following ingredients:

| | Composition (A) | Composition (B) |
|---|---|---|
| Ingredient | % bv weight | % by weight |
| Turkey Meat | 31.00 | 31.00 |
| Chicken Meat | 10.00 | 10.00 |
| Sodium Polyphosphate (Hamine - tradename) | 0.40 | 0.40 |
| Soy Concentrate Protein | 4.80 | 4.80 |
| Salt | 2.20 | 2.20 |
| Curing Salt | 0.04 | 0.04 |
| Sugar | 1.00 | 1.00 |
| Potato Starch | 10.00 | 10.00 |
| Cochinilla Color | 0.003 | 0.003 |
| Sodium Erythorbate | 0.10 | 0.10 |
| Carrageenan | 0.60 | 0.60 |
| Monosodium Glutamate | 0.10 | 0.10 |
| Flavor ⁽¹⁾ | 0.10 | 0.10 |
| 2-Acetyl-1-pyrrolidine hydrochloride | - | 0.0002 |
| Cold Water | 39.66 | 39.6598 |
| Total | 100 | 100 |

| | | |
|---|---|---|
| (1) ham, 706409 01903 (ex Firmenich Geneva, Switzerland) | | |

Each of the two products was prepared as follows:

In a first step, a brine was prepared by dissolving the sodium polyphosphate in the water, adding and dissolving the soy, adding and dissolving the salt and curing salt and finally adding and dissolving all the remaining ingredients (except the turkey and chicken meats).

The turkey and chicken meats were ground through a coarse 10mm plate and the brine added thereto. The paste was introduced into a conventional tumbler and tumbled under vacuum for 1 hour. It was then removed and stored at 4°C overnight, after which it was reintroduced into the tumbler and tumbled under vacuum for 1 hour. The resulting homogeneous paste was then introduced into an appropriately sized sausage casing and sealed under vacuum. The raw sausage was cooked in an oven at 80°C, 100% steam for about 20-30 minutes until the internal temperature of the sausage reached 73°C. The cooked sausage was then removed and cooled to 20°C in ice water and stored at 4°C. Each sausage product was then cut into slices of approximately 5mm thickness and tasted by an expert panel of flavorists.

Product A was found to give a clean meaty taste whereas product B was found to have an excellent rounded flavor described as dried ham or cured ham.

## Claims

1. Use of a compound of formula 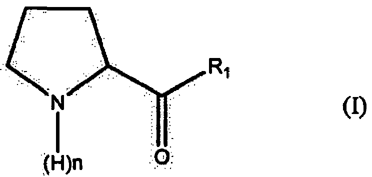 where n=1 and R¹ represents a methyl or ethyl group, said compound being in the form of an edible salt as flavor precursor for generating an ingredient to impart or reinforce the savory, meaty notes of a flavoring composition or of a flavored food.

2. Use according to claim 1, **characterized in that** said compound is in the form of an edible salt of an acid selected from the group consisting of HCl, acidic sulfates, or acidic phosphates, carbonic acids and C₂-C₂₀ carboxylic acids.

3. Use according to claim 1, **characterized in that** said compound is an edible salt of HCl of 2-acetyl pyrrolidine or 2-propionyl pyrrolidine.

4. A flavoring composition comprising:
i) as flavor precursor for an ingredient that imparts or reinforce the savory meaty note, at least one compound of formula (I), as defined in claim 1;
ii) at least one ingredient selected from the group consisting of a flavor carrier and a flavor base; and
iii) optionally at least one flavor adjuvant.

5. A flavoring composition as claimed in claim 4 wherein the flavor carrier is an acid.

6. A flavoring composition as claimed in claim 5 wherein the acid is selected from the group consisting of citric acid, phosphoric acid, and ascorbic acid.

7. A flavoring composition according to claim 4, comprising at least one compound of formula (I), as defined in claim 1, and at least one compound of formula 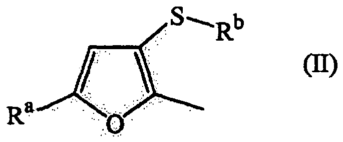 wherein R^{a} represents a hydrogen atom or a methyl group, and R^{b} represents a methyl or ethyl group, an acetyl group, or a C₃-C₁₀ group comprising a carbonyl group.

8. A flavoring composition according to claim 4 wherein the flavor base is of the savory, roast and/or caramel type.

9. A flavoring composition in the form of a foodstuff comprising:
i) at least one compound of formula (I), as defined in claim 1, or a composition as defined in any one of claims 4 to 8; and
ii) a foodstuff base.

10. A flavoring composition in the form of a foodstuff according to claim 9, **characterized in that** the foodstuff base is a savory cube, an instant soup, a canned soup, a preserved meat, instant noodles, a frozen dish or preparation, a sauce, a flavored oil and/or spread, a toffee, an alcoholic beverage having molasses/caramelic note, a snack or biscuit, or a pizza.

11. A method to confer, enhance, improve or modify the flavor properties of a flavoring composition or of a flavored food which comprises incorporating in the composition or food a flavor effective amount of a flavor precursor comprising a compound of formula 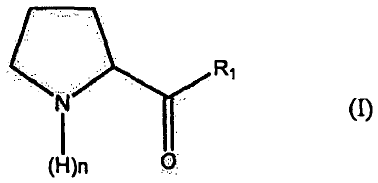 wherein n=1 and R¹ represents a methyl or ethyl group and the compound is in the form of an edible salt.

12. The method according to claim 11, wherein the compound is added in an amount effective to generate an ingredient to impart or reinforce the savory, meaty notes of the composition or food.

13. The method according to claim 11, wherein the compound is in the form of an edible salt of an acid selected from the group consisting of HCl, acidic sulfates, or acidic phosphates, carbonic acids and C₂-C₂₀ carboxylic acids.

14. The method according to claim 11, wherein the compound is an edible salt of HCl of 2-acetyl pyrrolidine or 2-propionyl pyrrolidine.

## Patentansprüche

1. Verwendung einer Verbindung der Formel 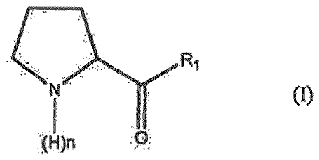 in der n = 1 und R¹ eine Methyl- oder Ethylgruppe darstellt, wobei die Verbindung in der Form eines essbaren Salzes ist, als Aromavorstufe zum Generieren eines Bestandteils zur Vermittlung oder Verstärkung der würzigen, fleischigen Noten einer aromatisierenden Zusammensetzung oder eines aromatisierten Lebensmittels.

2. Verwendung gemäß Anspruch 1, **dadurch gekennzeichnet, dass** die Verbindung in der Form eines essbaren Salzes einer Säure, ausgewählt aus der Gruppe, bestehend aus HCl, sauren Sulfaten oder sauren Phosphaten, Kohlensäuren und C₂-C₂₀-Carbonsäuren, ist.

3. Verwendung gemäß Anspruch 1, **dadurch gekennzeichnet, dass** die Verbindung ein essbares Salz von HCl von 2-Acetylpyrrolidin oder 2-Propionylpyrrolidin ist.

4. Aromatisierende Zusammensetzung, umfassend:
i) als Aromavorstufe für einen Bestandteil, der die würzige fleischige Note vermittelt oder verstärkt, mindestens eine Verbindung der Formel (I), wie in Anspruch 1 definiert;
ii) mindestens einen Bestandteil, ausgewählt aus der Gruppe, bestehend aus einem Aromaträger und einer Aromabasis; und
iii) wahlweise mindestens einen Aromahilfsstoff.

5. Aromatisierende Zusammensetzung, wie in Anspruch 4 beansprucht, in der der Aromaträger eine Säure ist.

6. Aromatisierende Zusammensetzung, wie in Anspruch 5 beansprucht, in der die Säure aus der Gruppe, bestehend aus Citronensäure, Phosphorsäure und Ascorbinsäure, ausgewählt ist.

7. Aromatisierende Zusammensetzung gemäß Anspruch 4, umfassend mindestens eine Verbindung der Formel (I), wie in Anspruch 1 definiert, und mindestens eine Verbindung der Formel 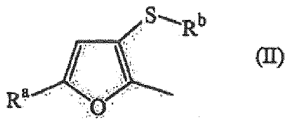 in der R^{a} ein Wasserstoffatom oder eine Methylgruppe darstellt und R^{b} eine Methyl- oder Ethylgruppe, eine Acetylgruppe oder eine C₃-C₁₀-Gruppe, umfassend eine Carbonylgruppe, darstellt.

8. Aromatisierende Zusammensetzung gemäß Anspruch 4, in der die Aromabasis vom Würz-, Röst- und/oder Karameltyp ist.

9. Aromatisierende Zusammensetzung in der Form eines Nahrungsmittels, umfassend:
i) mindestens eine Verbindung der Formel (I), wie in Anspruch 1 definiert, oder eine Zusammensetzung, wie in einem der Ansprüche 4 bis 8 definiert; und
ii) eine Nahrungsmittelbasis.

10. Aromatisierende Zusammensetzung in der Form eines Nahrungsmittels gemäß Anspruch 9, **dadurch gekennzeichnet, dass** die Nahrungsmittelbasis ein Würzwürfel, eine Instantsuppe, eine Dosensuppe, eine Fleischkonserve, Instantnudeln, ein Tiefkühlgericht oder eine Tiefkühlzubereitung, eine Soße, ein aromatisiertes Öl und/oder aromatisierter Aufstrich, ein Toffee, ein alkoholisches Getränk mit Melasse-/Karamelnote, ein Snack oder Keks oder eine Pizza ist.

11. Verfahren zum Übertragen, Verstärken, Verbessern oder Modifizieren der Aromaeigenschaften einer aromatisierenden Zusammensetzung oder eines aromatisierten Lebensmittels, welches Einbringen in die Zusammensetzung oder das Lebensmittel einer aromawirksamen Menge einer Aromavorstufe, umfassend eine Verbindung der Formel 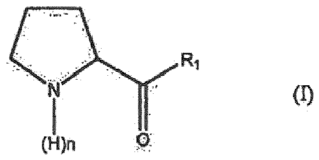 in der n = 1 und R¹ eine Methyl- oder Ethylgruppe darstellt und die Verbindung in der Form eines essbaren Salzes ist, umfasst.

12. Verfahren gemäß Anspruch 11, in dem die Verbindung in einer Menge hinzugefügt wird, die wirksam ist, um einen Bestandteil zur Vermittlung oder Verstärkung der würzigen, fleischigen Noten der Zusammensetzung oder des Lebensmittels zu generieren.

13. Verfahren gemäß Anspruch 11, in dem die Verbindung in der Form eines essbaren Salzes einer Säure, ausgewählt aus der Gruppe, bestehend aus HCl, sauren Sulfaten oder sauren Phosphaten, Kohlensäuren und C₂-C₂₀-Carbonsäuren, ist.

14. Verfahren gemäß Anspruch 11, in dem die Verbindung ein essbares Salz von HCl von 2-Acetylpyrrolidin oder 2-Propionylpyrrolidin ist.

## Revendications

1. Utilisation d'un composé de formule 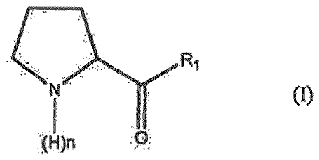 dans laquelle n = 1 et R¹ représente un groupe méthyle ou éthyle, ledit composé étant sous forme de sel comestible, en tant que précurseur d'arôme pour générer un ingrédient permettant de conférer ou de renforcer les notes de viande, salées, d'une composition aromatisante ou d'un aliment aromatisé.

2. Utilisation selon la revendication 1, **caractérisée en ce que** ledit composé est sous forme de sel comestible d'un acide sélectionné dans le groupe constitué de HCl, des sulfates acides, ou des phosphates acides, des acides carboniques et des acides carboxyliques en C₂-C₂₀.

3. Utilisation selon la revendication 1, **caractérisée en ce que** ledit composé est un sel comestible de HCl de la 2-acétylpyrrolidine ou de la 2-propionylpyrrolidine.

4. Composition aromatisante comprenant:
i) en tant que précurseur d'arôme pour un ingrédient qui confère ou renforce la note de viande, salée, au moins un composé de formule (I), tel que défini dans la revendication 1;
ii) au moins un ingrédient sélectionné dans le groupe constitué d'un support d'arôme et d'une base d'arôme; et
iii) éventuellement, au moins un adjuvant d'arôme.

5. Composition aromatisante selon la revendication 4 dans laquelle le support d'arôme est un acide.

6. Composition aromatisante selon la revendication 5 dans laquelle l'acide est sélectionné dans le groupe constitué de l'acide citrique, de l'acide phosphorique, et de l'acide ascorbique.

7. Composition aromatisante selon la revendication 4, comprenant au moins un composé de formule (I), tel que défini dans la revendication 1, et au moins un composé de formule 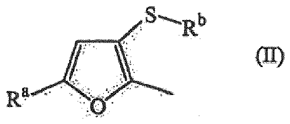 dans laquelle R^{a} représente un atome d'hydrogène ou un groupe méthyle, et R^{b} représente un groupe méthyle ou éthyle, un groupe acétyle, ou un groupe en C₃-C₁₀ comprenant un groupe carbonyle.

8. Composition aromatisante selon la revendication 4 dans laquelle la base d'arôme est du type salé, rôti et/ou caramel.

9. Composition aromatisante sous forme de produit alimentaire comprenant:
i) au moins un composé de formule (I), tel que défini dans la revendication 1, ou une composition telle que définie dans l'une quelconque des revendications 4 à 8; et
ii) une base de produit alimentaire.

10. Composition aromatisante sous forme de produit alimentaire selon la revendication 9, **caractérisée en ce que** la base de produit alimentaire est un cube salé, une soupe instantanée, une soupe en boîte, une conserve de viande, des nouilles instantanées, une préparation ou un plat congelé, une sauce, une huile aromatisée et/ou un produit à tartiner aromatisé, un caramel, une boisson alcoolisée possédant une note de mélasse/de caramel, un amuse-gueule ou un biscuit, ou une pizza.

11. Procédé pour conférer, intensifier, améliorer ou modifier les propriétés aromatisantes d'une composition aromatisante ou d'un aliment aromatisé qui comprend l'incorporation, dans la composition ou l'aliment, d'une quantité aromatisante efficace d'un précurseur d'arôme comprenant un composé de formule 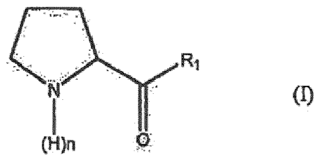 dans laquelle n = 1 et R¹ représente un groupe méthyle ou éthyle, et le composé est sous forme de sel comestible.

12. Procédé selon la revendication 11, dans lequel le composé est ajouté en une quantité efficace pour générer un ingrédient permettant de conférer ou de renforcer les notes de viande, salées, de la composition ou de l'aliment.

13. Procédé selon la revendication 11, dans lequel le composé est sous forme de sel comestible d'un acide sélectionné dans le groupe constitué de HCl, des sulfates acides, ou des phosphates acides, des acides carboniques et des acides carboxyliques en C₂-C₂₀.

14. Procédé selon la revendication 11, dans lequel le composé est un sel comestible de HCl de la 2-acétylpyrrolidine ou de la 2-propionylpyrrolidine.
